# EUROPÄISCHE PATENTSCHRIFT

(11) **EP 3 354 507 B1**
(45) Veröffentlichungstag und Bekanntmachung des Hinweises auf die Patenterteilung: **22.07.2020**
(21) Anmeldenummer: 18000056.4
(22) Anmeldetag: 23.01.2018
(51) Int. Cl.: B60K 15/03, B60K 15/04

(54) **TANKSICHERUNG**
ANTI-THEFT TANK
RESERVOIR ANTIVOL

(30) Priorität: 27.01.2017 DE 102017000724
(43) Veröffentlichungstag der Anmeldung: 01.08.2018
(73) Patentinhaber: Riedlberger, Markus, 85302 Gerolsbach (DE)
(72) Erfinder: Riedlberger, Markus, 85302 Gerolsbach (DE)
(74) Vertreter: Wunderlich, Rainer

(56) Entgegenhaltungen:
- EP-A1- 0 715 998
- EP-A1- 0 922 601
- EP-A1- 2 030 827
- DE-A1- 19 638 162

## Beschreibung

Die Erfindung betrifft einen diebstahlgesicherten Tank nach Anspruch 1.

Die Erfindung umfasst einen Diebstahlschutz bei Tanks oder Energiebehältern für flüssige oder gasförmige Medien oder Treibstoffe, wie sie in Arbeitsgeräten oder Kraftfahrzeugen an- oder eingebaut sind.

Bei Baumaschinen oder Kraftfahrzeugen, die im freien Gelände oder in unbewachten Bereichen abgestellt werden, werden in erheblichem Umfang Diesel oder andere Kraftstoffe während der Nachtzeit entwendet.

Dabei werden selbst verschließbare Tankdeckel mit Gewalt entfernt, um anschließend den Kraftstoff mit Schläuchen aus den Vorratstanks abzusaugen.

Ebenso wird der Entnahmeschlauch des Brennstoffs abgetrennt und über diesen der Kraftstoff abgepumpt.

Als Schutzmaßnahme werden Siebe in die Entnahme- oder Füllöffnungen eingeschweißt, um ein Einführen von Saugschläuchen zu verhindern.

Die DE 10 2012 101 381 B3 zeigt so ein Schutzsieb

Dies bietet nur wenig Widerstand, denn bei Verwendung eines Lochsiebes oder Schlitzsiebes werden dann eben mehrere kleine Saugschläuche eingeführt oder die Siebe werden durch flexible, meißelartige Werkzeuge, welche in die Leitungen, Schläuche oder Rohre eingeführt werden, zerstört oder ins Innere des Tanks geschoben. So wird der Weg freigemacht für Absaugschläuche vielfältiger Art.

Aus der EP 0 922 601 A1 ist eine Kugelventilanordnung für einen Tankeinfüllstutzen bekannt, um diesen abzusperren.

Eine weitere Absperrvorrichtung für einen Tankeinfüllstutzen mit einer elektronischen Zugangserkennung geht aus der EP 2 030 827 A1 hervor. Die Absperreinrichtung ist dabei in einem Deckel eingebaut.

Die EP 0 715 998 A1 offenbart eine Wegfahrsperre für ein Fahrzeug, wobei eine Kraftstoffleitung durch eine Sperreinrichtung im Tank blockiert werden kann. Hierdurch kann ein unbefugtes Starten des Motors und Wegfahren des Fahrzeugs verhindert werden.

Die Erfindung hat die Aufgabe, die unerlaubte Entnahme von Kraftstoffen bei Fahrzeugen zu verhindern.

Die Lösung der Aufgabe erfolgt entsprechend den Merkmalen des Patentanspruchs 1. Bevorzugte Ausführungen der Erfindung sind in den abhängigen Ansprüchen angegeben.

Anhand von Figuren wird die Funktionsweise der Erfindung näher erläutert.
Fig. 1 zeigt einen vertikalen Schnitt durch einen beispielhaften, diebstahlgesicherten Tank für ein flüssiges Energiemedium.
Fig. 2 zeigt einen vertikalen Schnitt eines weiteren Ausführungsbeispiels, bei dem als Besonderheit die Leitungen nicht geradlinig, sondern gekrümmt ausgeführt werden.

Bei einem diebstahlgesicherten Tank 1 für flüssige oder gasförmige Medien in Arbeitsgeräten oder Kraftfahrzeugen wird die Entnahmeleitung 4 und/oder Befüllleitung 2 und/oder falls vorhanden eine Belüftungsleitung und/oder falls vorhanden die Rücklaufleitung 3 des Tanks 1 mit beweglichen Absperrvorrichtungen 5 versehen, die im Inneren des Tanks 1 angeordnet sind und diese Absperrvorrichtungen 5 sind mit Antrieben 6 zum Öffnen und Schließen versehen und wobei die Auslösung oder Betätigung der Antriebe 6 über Schalter 10 außerhalb des Tanks 1 , die durch Sicherheitseinrichtungen gegen unbefugte Betätigung geschützt sind, erfolgt und/oder über Funk betätigte Schaltelemente 7 im Tankinneren, die über Sender von außerhalb geschaltet werden.

Zur Ausstattung eines Tanks gehört in jedem Fall eine Befüllleitung (2) und eine Entnahmeleitung (4). Damit beim Ansaugen durch die Pumpe des Verbrennungsmotors im geschlossenen Tank kein Unterdruck entsteht, wird entweder eine Entlüftungsleitung angeordnet oder eine Rücklaufleitung 3, durch welche der überschüssige Treibstoff wieder in den Tank 1 gelangt und so kein Unterdruck entsteht.

Dabei liegt der Grundgedanke der Erfindung darin, dass **alle** Verbindungen, die von außen ins Innere des Tanks zu den Treibstoffen führen und die ermöglichen, dass Entnahmeschläuche eingeführt werden, eine Absperrvorrichtung 5 erhalten, mit der man einen Querschnittsverschluss bewirken kann, der das Einführen von Entnahmeschläuchen verhindert.

Durch die Anordnung der Absperrvorrichtungen 5 im Inneren des in der Regel aus Stahl hergestellten Tanks 1 können diese Absperrvorrichtungen 5 in geschlossenem Zustand nur durch einen sehr hohen technischen Aufwand geöffnet werden. Es bleibt als einzige Möglichkeit nur, diese Verschlüsse gewaltsam zu zerstören oder aufzubohren.

Das Aufbohren wird jedoch stark dadurch behindert, dass die Absperrvorrichtungen 5 bevorzugter weise aus Edelstahl oder aus einer sehr zähen Stahllegierung bestehen, die mit normalen Bohrwerkzeugen nur schwer überwunden werden können.

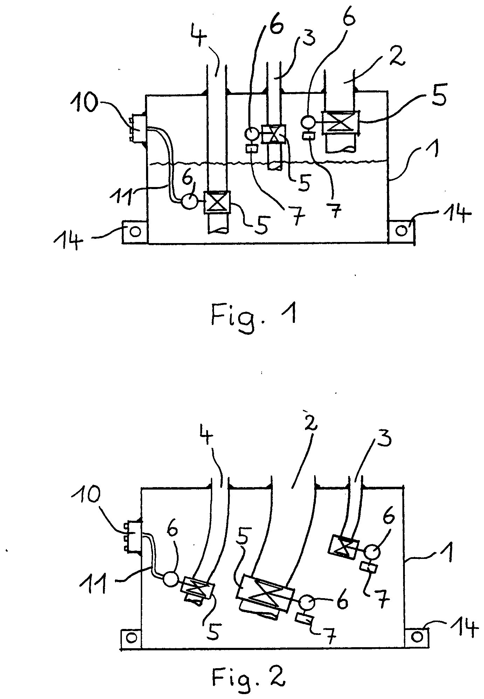

Fig. 2 zeigt eine weitere bevorzugte Ausführungsvariante, bei der das Aufbohren der Absperrvorrichtungen 5 dadurch erschwert wird, dass die Saug- oder Füllrohre, die ins Innere des Energiebehälters 1 hineinragen, nicht geradlinig, sondern gekrümmt ausgeführt werden. Auf diese Weise lässt sich kein normaler, gerader Bohrer zum Aufbohren verwenden. Flexible Antriebswellen stehen den Dieben nicht so leicht zur Verfügung.

Eine weitere Besonderheit der Erfindung liegt darin, dass die Absperrvorrichtungen 5 durch Antriebe 6 im Inneren des Energiebehälters 1 betätigt werden. Diese Betätigung kann nur durch indirekte Mittel von außen erfolgen.

Das Öffnen oder Schließen der Absperrvorrichtungen 5 erfolgt dabei in der Regel über Drehmotoren, Zylinder- oder Zahnstangen nach dem Stand der Technik. Da Es sich in der Regel um brennbare oder leichtentzündliche Kraftstoffe im Tank handelt, sollten funkengeschützte Vorrichtungen verwendet werden.

Die Absperrvorrichtungen 5 sind Absperrvorrichtungen, wie sie nach dem Stand der Technik zum Absperren oder Verschließen von Hydraulikleitungen , Wasserleitungen oder Gasleitungen verwendet werden.

Bevorzugter Weise handelt es sich bei diesen Absperrvorrichtungen 5 um Kugelhähne, Schieber, Drehschieber, verschiebbare Konusse, bewegliche Kugeln oder Techniken, wie sie aus dem Wasserleitungsbau bekannt sind.

Bei den Schiebern werden quer zur Leitungsachse Flächen in den Leitungsquerschnitt eingeschoben um diesen zu verschließen.

Der Verschluss des Querschnitts kann auch nach dem Prinzip einer Irisblende geschehen.

Drehschieber funktionieren so, dass eine querschnittsverschließende Fläche oder Scheibe aus einer parallelen Stellung zur Leitungsachse in eine Querstellung verdreht wird.

Die Absperrvorrichtungen 5 werden durch Antriebe 6 betätigt, wie sie aus dem Stand der Technik zur Betätigung von Absperrvorrichtungen bekannt sind.

Bevorzugter Weise sind das kleine Motoren mit Getrieben oder gegebenenfalls Hydraulikzylinder, die mit Flüssigkeit oder Luft betrieben werden.

Das Ein- und Ausschalten erfolgt über Schaltelemente 7 im Inneren des Tanks 1 oder über besonders geschützte Sicherheitsschalter 10 außerhalb des Tanks.

Um die Absperrvorrichtungen 5 zu öffnen oder zu schließen, können auch Schaltelemente 7 im Inneren des Tanks 1 betätigt werden. Diese Schaltelemente 7, wenn sie als durch Funk betätigte Schalter (Funkschalter) nach dem Stand der Technik ausgestaltet sind, können drahtlos geschaltet werden, das heißt über eine kodierte Funkfernsteuerung von außerhalb des Tanks 1.

In einer weiteren Anwendungsvariante kann die Betätigung der Antriebe 6 der Absperrvorrichtungen 5 über Leitungen 11 in Gang gesetzt werden, die zu außen am Tank 1 angeordneten Schaltern 10 geführt werden können.

Diese Schalter 10 sollten Sicherheitsschalter gegen unbefugte Betätigung nach dem Stand der Technik sein, wie zum Beispiel Schlüsselschalter, kodierte Tastaturenschalter, Funkschalter oder Transpondertechnik.

Bei der Transponder-Signalübertragungstechnik hält man einen kodierten Chip an den Schalter, um den Schaltvorgang zum Öffnen oder Schließen auszulösen.

Eine weitere Möglichkeit nach dem Stand der Technik besteht darin, dass der Einschaltvorgang am Sicherheitsschalter 10 über Fotosensoren, Infrarotsignale, elektromagnetische Signale oder durch Farberkennung von vorgegebenen Lichtleisten eingeleitet wird oder die Erkennung von Fingerabdrücken.

Die bevorzugte Konstruktion solcher Sicherheitsschalter 10 nach dem Stand der Technik ist dadurch gekennzeichnet, dass durch mechanische Beschädigung des Sicherheitsschalters 10 auch die Leitung 11 zerstört wird und somit durch gewaltsame Entfernung der Sicherheitsschalter 10 keine Auslösung oder Betätigung der Antriebe 6 mehr möglich ist.

Die Antriebe 6 und/oder die Schaltelemente 7 benötigen in der Regel eine Stromversorgung. Diese kann entweder dauerhaft oder über eine lösbare Stromverbindung nach außen erfolgen.

Eine weitere bevorzugte Ausführungsform besteht darin, dass das Öffnen und Schließen der Absperrvorrichtungen 5 mit den dazugehörigen Antrieben 6 über Akkus oder Batterien erfolgt, die sich außerhalb oder innerhalb des Tanks 1 befinden.

Eine weitere Besonderheit besteht darin, dass der diebstahlgeschützte Tank 1 eingeschränkt lösbar mit der Baumaschine oder dem Kraftfahrzeug verbunden ist.

Über lösbare Sicherheitsverbindungselemente 14 nach dem Stand der Technik können damit die diebstahlgeschützten Tanks 1 bei den Fahrzeugen nachgerüstet oder nachträglich ein- und ausgebaut werden, wenn man die geeigneten Hilfsmittel oder Werkzeuge besitzt.
Bei diesen Sicherheitsverbindungselementen 14 handelt es sich dabei im wesentlichen um unterschiedlichste Ausführungsformen von Sicherheitsschlössern oder Sicherheitssperrzylindern oder Sperrbolzen nach dem Stand der Technik, welche das Entwenden des ganzen Tanks schwer oder unmöglich machen oder dabei zu einer Zerstörung des Tanks führen.

## Patentansprüche

1. DiebstahlgesicherterTank für flüssige oder gasförmige Medien in Baumaschinen oder Kraftfahrzeugen, wobei
- der Tank (1) mit der Baumaschine oder dem Kraftfahrzeug lösbar mittels Sicherheitsverbindungselementen (14) verbindbar ist, welche Sicherheitsschlösser oder Sicherheitssperrzylinder umfassen,
- alle Verbindungen, die von außen ins Innere des Tanks (1) führen und zumindest eine Befüllleitung (2) umfassen, und die ermöglichen, dass Entnahmeschläuche eingeführt werden können, jeweils mit einer beweglichen Absperrvorrichtung (5) versehen sind, welche im Inneren des Tanks (1) angeordnet ist,
- jede Absperrvorrichtung (5) mit einem Antrieb (6) zum Öffnen und Schließen versehen ist,
- zur Betätigung des Antriebs (6) ein Schalter (10) außerhalb des Tanks (1) vorgesehen ist, und
- der Schalter (10) durch eine Sicherheitsvorrichtung gegen unbefugte Betätigung geschützt ist.

2. Diebstahlgesicherter Tank nach Anspruch 1,
**dadurch gekennzeichnet, dass**
die Sicherheitseinrichtung gegen unbefugte Betätigung nach dem Prinzip eines Schlüsselschalters, kodierter Tastaturen, Funkschalter, Transponder-Signalübertragungstechnik oder über elektromagnetische Signale, Fotosensoren, Infrarotsignale oder Fingerabdruckerkennung funktioniert.

3. Diebstahlgesicherter Tank nach einem der Ansprüche 1 oder 2,
**dadurch gekennzeichnet,**
**dass** im Inneren des Tanks (1) zur Betätigung des Antriebs (6) über Funk betätigbare Schalterelemente (7) angeordnet sind, welche über einen Sender von außerhalb geschaltet werden.

4. Diebstahlgesicherter Tank nach einem der Ansprüche 1 bis 3,
**dadurch gekennzeichnet,**
**dass** die Energieversorgung der Antriebe (6) und/oder der Schalterelemente (7) über lösbare Verbindungsleitungen erfolgt, die nach außen geführt sind.

5. Diebstahlgesicherter Tank nach einem der Ansprüche 1 bis 4,
**dadurch gekennzeichnet,**
**dass** die Energieversorgung der Antriebe (6) und/oder Schalterelemente (7) über Ackus erfolgt, welche innerhalb oder außerhalb des Tanks (1) angeordnet sind.

6. Diebstahlgesicherter Tank nach einem der Ansprüche 1 bis 5,
**dadurch gekennzeichnet,**
**dass** die Absperrvorrichtungen (5) zumindest teilweise aus Edelstahl oder hochfesten Metallverbindungen bestehen, die einen hohen Widerstand gegen Aufbohren bedingen.

7. Diebstahlgesicherter Tank nach einem der Ansprüche 1 bis 6,
**dadurch gekennzeichnet,**
**dass** die Absperrvorrichtungen (5) aus Elementen bestehen, welche für Hydraulik-, Wasser- oder Gasleitungen eingesetzt sind, wie z.B. Schieber, Drehschieber, Kugelhähne, Magnetventile, verschiebbare Konusse und Kugelverschlüsse.

8. Diebstahlgesicherter Tank nach einem der Ansprüche 1 bis 7,
**dadurch gekennzeichnet,**
**dass** die Verbindungen neben der Befüllleitung (2) eine Entnahmeleitung (4) und/oder eine Belüftungsleitung und/oder eine Rücklaufleitung (3) aufweisen.

9. Diebstahlgesicherter Tank nach Anspruch 8,
**dadurch gekennzeichnet,**
**dass** die Entnahmeleitung (4) und/oder die Befüllleitung (2) und/oder die Belüftungs- oder Rücklaufleitung (3) des Tanks (1) im Inneren des Behälters gekrümmt ausgeführt werden.

10. Baumaschine,
**dadurch gekennzeichnet,**
**dass** ein Tank (1) nach einem der Ansprüche 1 bis 3 lösbar angebracht ist.

11. Kraftfahrzeug,
**dadurch gekennzeichnet,**
**dass** ein Tank (1) nach einem der Ansprüche 1 bis 9 lösbar angebracht ist.

## Claims

1. Anti-theft tank for liquid or gaseous media in construction machines or motor vehicles, wherein
- the tank (1) can be connected in a releasable manner to the construction machine or the motor vehicle by means of safety connection elements (14) which comprise safety locks or safety locking cylinders,
- all connections which lead from the outside into the interior of the tank (1) and at least comprise a filling line (2) and which enable the insertion of withdrawal hoses are each provided with a movable shut-off device (5) arranged in the interior of the tank (1),
- each shut-off device (5) is provided with a drive (6) for opening and closing,
- for actuation of the drive (6) a switch (10) is provided outside the tank (1), and
- the switch (10) is protected by a safety means against unauthorized actuation.

2. Anti-theft tank according to claim 1,
**characterized in that**
the safety means against unauthorized actuation functions according to the principle of a key switch, coded keypads, radio switches, transponder signal transmission technology or via electromagnetic signals, photosensors, infrared signals or fingerprint recognition.

3. Anti-theft tank according to any one of claims 1 or 2,
**characterized in that**
in the interior of the tank (1) via radio actuatable switch elements (7) which are switched via a transmitter from the outside are arranged for actuation of the drive (6).

4. Anti-theft tank according to any one of claims 1 to 3,
**characterized in that**
the power supply of the drives (6) and/or the switch elements (7) takes place via releasable connecting lines that are led to the outside.

5. Anti-theft tank according to any one of claims 1 to 4,
**characterized in that**
the power supply of the drives (6) and/or the switch elements (7) takes place via rechargeable batteries that are arranged inside or outside the tank (1).

6. Anti-theft tank according to any one of claims 1 to 5,
**characterized in that**
the shut-off devices (5) consist at least partially of stainless steel or high-strength metal compounds that bring about a high resistance against opening by drilling.

7. Anti-theft tank according to any one of claims 1 to 6,
**characterized in that**
the shut-off devices (5) consist of elements employed for hydraulic, water or gas lines, such as slides, rotary slides, ball valves, magnetic valves, displaceable cones and ball closures.

8. Anti-theft tank according to any one of claims 1 to 7,
**characterized in that**
in addition to the filling line (2) the connections have a withdrawal line (4) and/or a ventilation line and/or a return line (3).

9. Anti-theft tank according to claim 8,
**characterized in that**
the withdrawal line (4) and/or the filling line (2) and/or the ventilation or return line (3) of the tank (1) are of curved design in the interior of the container.

10. Construction machine,
**characterized in that**
a tank (1) according to any one of claims 1 to 3 is fixed in a releasable manner.

11. Motor vehicle,
**characterized in that**
a tank (1) according to any one of claims 1 to 9 is fixed in a releasable manner.

## Revendications

1. Réservoir antivol pour des fluides liquides ou gazeux dans des engins de chantier ou des véhicules automobiles, dans lequel
- le réservoir (1) peut être relié avec l'engin de chantier ou le véhicule automobile de manière détachable au moyen d'éléments de liaison de sécurité (14), qui comportent des serrures de sécurité ou des cylindres de blocage de sécurité,
- toutes les liaisons qui mènent de l'extérieur à l'intérieur du réservoir (1) et comportent au moins une conduite de remplissage (2), et qui permettent que des tuyaux de retrait puissent être introduits, sont pourvues chacune d'un dispositif de blocage (5) mobile qui est agencé à l'intérieur du réservoir (1),
- chaque dispositif de blocage (5) est pourvu d'un entraînement (6) pour l'ouverture et la fermeture,
- pour l'actionnement de l'entraînement (6) un commutateur (10) est prévu en dehors du réservoir (1), et
- le commutateur (10) est protégé par un dispositif de sécurité contre l'actionnement non autorisé.

2. Réservoir antivol selon la revendication 1,
**caractérisé en ce que**
le dispositif de sécurité fonctionne contre l'actionnement non autorisé selon le principe d'un commutateur à clé, de claviers codés, de commutateurs radio, d'une technique de transmission de signal de transpondeur ou par le biais de signaux électromagnétiques, de capteurs photo, de signaux à infrarouge ou d'une détection d'empreinte digitale.

3. Réservoir antivol selon l'une des revendications 1 ou 2,
**caractérisé en ce que**
des éléments commutateurs (7) actionnables par radio pour l'actionnement de l'entraînement (6) sont agencés à l'intérieur du réservoir (1), lesquels sont commutés par un émetteur de l'extérieur.

4. Réservoir antivol selon l'une des revendications 1 à 3,
**caractérisé en ce que**
l'alimentation en énergie des entraînements (6) et/ou des éléments commutateurs (7) est effectuée par des conduites de liaison amovibles qui sont menées vers l'extérieur.

5. Réservoir antivol selon l'une des revendications 1 à 4,
**caractérisé en ce que**
l'alimentation en énergie des entraînements (6) et/ou des éléments commutateurs (7) est effectuée par des accumulateurs qui sont agencés à l'intérieur ou à l'extérieur du réservoir (1).

6. Réservoir antivol selon l'une des revendications 1 à 5,
**caractérisé en ce que**
les dispositifs de blocage (5) se composent au moins partiellement d'acier spécial ou de composés métalliques à résistance élevée qui conditionnent une résistance élevée contre l'alésage.

7. Réservoir antivol selon l'une des revendications 1 à 6,
**caractérisé en ce que**
les dispositifs de blocage (5) se composent d'éléments qui sont utilisés pour des conduites hydrauliques, d'eau ou de gaz, comme par exemple des valves, des valves rotatives, des robinets à boisseau sphérique, des vannes magnétiques, des cônes mobiles et des fermetures sphériques.

8. Réservoir antivol selon l'une des revendications 1 à 7,
**caractérisé en ce que**
les liaisons présentent à côté de la conduite de remplissage (2) une conduite de retrait (4) et/ou une conduite de ventilation et/ou une conduite de retour (3).

9. Réservoir antivol selon la revendication 8,
**caractérisé en ce que**
la conduite de retrait (4) et/ou la conduite de remplissage (2) et/ou la conduite de ventilation ou de retour (3) du réservoir (1) sont réalisées de manière courbée à l'intérieur du récipient.

10. Engin de chantier,
**caractérisé en ce que**
un réservoir (1) selon l'une des revendications 1 à 3 est monté de manière détachable.

11. Véhicule automobile,
**caractérisé en ce que**
un réservoir (1) selon l'une des revendications 1 à 9 est monté de manière détachable.
